# EUROPEAN PATENT SPECIFICATION

(11) **EP 2 921 754 B1**
(45) Date of publication and mention of the grant of the patent: **09.06.2021**
(21) Application number: 15160289.3
(22) Date of filing: 23.03.2015
(51) Int. Cl.: F16L 1/24, B66C 1/12, B66C 1/16, B66C 1/14

(54) **AN IMPROVED LIFTING ASSEMBLY**
VERBESSERTE HEBEANORDNUNG
ENSEMBLE DE LEVAGE AMÉLIORÉ

(30) Priority: 21.03.2014 GB 201405044
(43) Date of publication of application: 23.09.2015
(73) Proprietor: Pipeshield International Ltd, Lowestoft, Suffolk NR32 2HD (GB)
(72) Inventor: WANKOWSKI, John, Lowestoft, NR32 2HD (GB)
(74) Representative: ip21 Ltd

(56) References cited:
- CA-A1- 2 421 176
- DE-U- 1 909 753
- GB-A- 547 176
- US-A- 2 598 921
- US-A- 3 011 820
- US-A- 3 827 744
- US-A1- 2010 327 615

## Description

### Field of the Invention

The present invention relates to a lifting assembly for use in transferring one or more concrete mattresses simultaneously or the like between locations. In particular the mattresses are for use in a subsea environment, for example to protect pipelines or cables.

### Background to the Invention

Within the subsea industry, the use of coverings to protect structures such as pipelines, cables, etc., lying on the seabed is well-known. The coverings protect these structures from damage caused by objects falling on them and can also act to reduce scouring of the seabed beneath the structure. One particular example of a covering suitable to be used in conjunction with the present invention, is often referred to as a mattress, is formed of a plurality of concrete blocks linked together with fibre rope: the rope providing flexibility to the shape of the mattress. As in the case of GB 2379472, the blocks can be profiled to optimise current flow over the mattress A loader according to the preamble of claim 1 is known from US 2 598 921 A.

There remains the problem of moving a mattress which can weight several tonnes between locations. Presently available loaders are of designs such that they cause damage to the mattress itself: especially where the loader is carrying, as it usually will, more than one mattress. Moreover, the loader along with its mattress is liable to swing in mid-air about a vertical axis making difficult the control of the orientation of the mattresses. In addition to these problems, storage of such loaders, when not required, leads to entanglement between different elements of the loader. The result of the above is that presently available loaders are difficult to utilise and can be dangerous and awkward to operate.

It is an object of the present invention to provide a loader which seeks to address the above problems. It is a further object of the invention to provide a method of moving a mattress between locations.

### Summary of the Invention

According to the invention there is provided a loader for moving mattresses between locations, the loader comprising,
first and second elongate members,
said elongate members being arranged parallel to each other and linked together by a plurality of flexible strops. The strops reduce the chance of damage to the mattress.

According to the invention, the strops are formed of a webbing material which webbing, is further preferably formed from a plastics material such as a polyester or a polypropylene. Such strops are further preferably formed and stitched to provide eye loops and are certified to a defined safe working load. The result of using the above materials is a strong, yet lightweight support for the mattresses. In addition, strengthening to the webbing can be yet further preferably provided by metal wires woven into the material.

Optionally a strop can be increased or decreased in length to accommodate different sizes of mattresses. Further optionally one or more further strops are joined across two or more strops to increase the load-bearing capacity. A strop may yet further optionally include wear sleeves to minimize abrasion damage.

According to the invention, an elongate member has a tubular construction to reduce the weight of an elongate member. Further preferably, the tubing is of circular cross-section which reduces damage to a mattress and also eases the movement of the loader. Alternatively, an elongate member has a right-angle cross-section to aid construction of an elongate member.

There is also provided; a lifting assembly comprising a loader according to the invention, and further including a frame to support the loader during operation, the frame having, depending from each of two opposed edges, a connection means to receive and retain a sling, the sling coupling the frame to the elongate member of the loader.

The frame further comprises connection means to enable the frame to be linked to a lifting means to load the lifting assembly from one location to another. The facility of fixing the loader to multiple and spaced apart portions of the frame reduces the stress forces on a particular element of the frame and also reduces the curvature imposed on the flexible strops when carrying mattresses. This in turn reduces the stress on the mattresses caused by curvature of the mattresses.

Optionally, the frame includes a plurality of legs to support the frame when not in use.

In accordance with an example which does not form part of the claimed subject-matter, there is provided a frame for use in conjunction with a loader as described above, the frame having a generally square or rectangular shape formed of four or more elongate members and having depending therefrom linkage means enabling a loader to be attached thereto and also including further linkage means enabling the frame to be attached to a lifting means.

The frame optionally includes legs, which are sized to permit easy access to connect and disconnect the main lifting strops from the frame by releasing the safety hooks, additionally during storage of the frame the legs maintain the elongate members and the loader connection means off the ground and reduce the damage thereto.

According to the invention there is also provided a method of moving a plurality of mats from one location to another. The method comprising the steps of laying down a loader as defined above on a flat surface such as the ground;
placing one or more mattresses on the flexible strops of the loader in a stacked configuration,
positioning a frame as described and defined above, above the mattresses and the loader; and
fixing, by means of webbing strops, the elongate members of the loader to the coupling means of the frame.

The lifting of the frame gathers up the elongate members and by means of the main strops contains the mattresses in a catenary shape and provides a secure and safe assembly to transfer to the required location.

### Brief Description of the Drawings

The invention is now described with reference to the accompanying drawings which show by way of example only, two embodiments of a loader and of a frame. In the drawings,
Figures 1a, 1b are respectively an end elevation and a side elevation of a first embodiment of a loader and frame;
Figure 2a is a plan elevation and Figure 2b an end elevation along A of Figure 2a of a loader;
Figure 3 shows a detail of the loader tube in the dashed rectangle of Figure 2a;
Figures 4 and 5 are enlarged sections through the tube of Figure 3;
Figure 4a is a plan elevation and Figure 4b an end elevation along A of Figure 4a of a frame;
Figure 5 is an enlarged sectional view of the cheek plate along B of Figure 4a;
Figure 6 is a perspective view of a frame;
Figure 7a is plan elevation of a second embodiment of a loader and Figure 7b an end elevation of a frame including mattresses; and
Figure 8 illustrates the method of use of a lifting assembly.

### Detailed Description of the Invention

The following description makes reference to a concrete mattress comprising an array of linked blocks which mattress is used to cover and protect a subsea structure such as a pipeline or cable. It should be recognised that the apparatus in accordance with the invention is also suitable for other, similar types of mattresses in use within the industry.

Such mats are usually stored in a stacked arrangement in readiness for transfer either to a ship for transport or for transfer to the subsea site. For convenience and speed, several mattresses are moved in a single transfer operation. Typically a 150mm thick mattress can weigh around 5 tonnes and a 300mm thick mattress can weigh over 9 tonnes, so it will be appreciated that specialised equipment and safety precautions need to be taken.

Presently, lifting assemblies are used which can support the mattresses and which can be lifted using a conventional crane. However, such loaders suffer from several disadvantages. Firstly, the loaders tend to partially fold in use. This leads to compression, particularly of the central blocks of a mattress, against one another and damage to these blocks. Second, the lifting assembly itself can cut into the blocks and cause damage thereto. Third, when not in use, the individual elements of a lifting assembly become entangled and difficult to separate from one another.

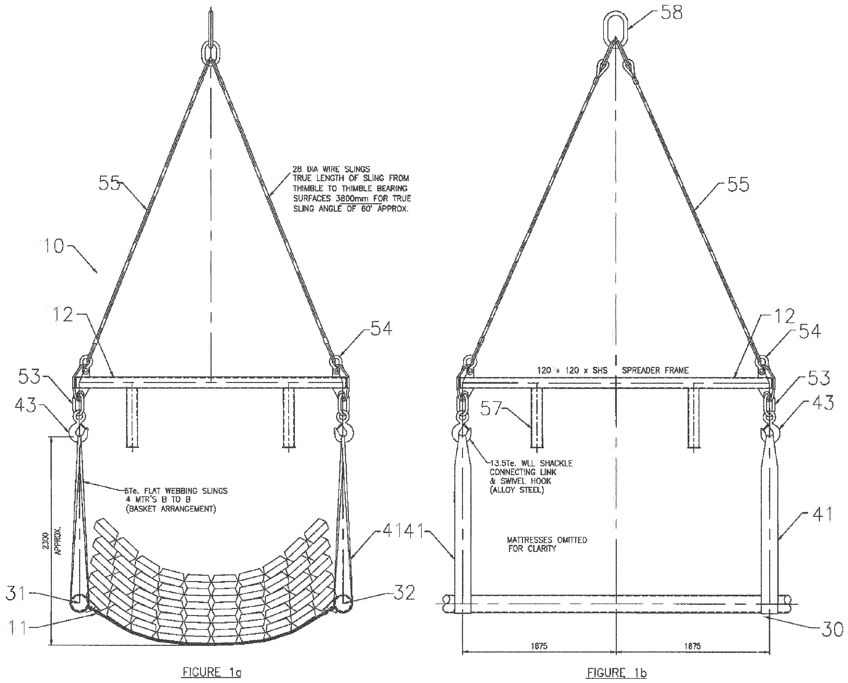

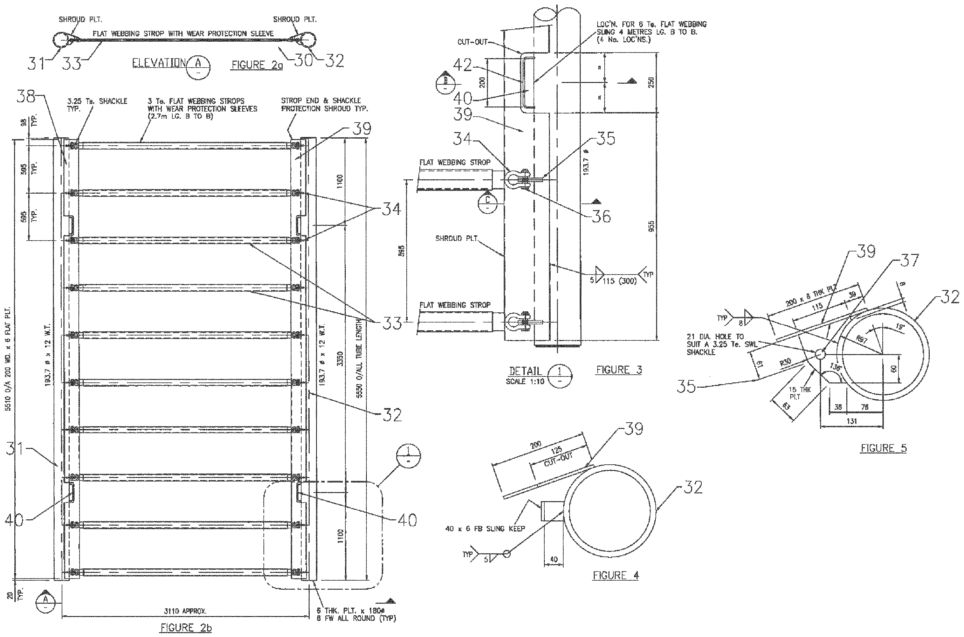

In order to alleviate these problems a lifting assembly, including a loader as described below is contemplated. In Figures 1a, 1b a lifting assembly generally referenced 10, comprises a plurality of co-operating elements. A stack of mattresses 11 can be seen in Figure 1a to be supported by a loader 30 (shown in more detail in Figures 2a, 2b). The loader 30 is itself, in use, suspended from a rigid frame 12 (shown in more detail in Figures 4a, 4b). The assembly comprising the frame 12 and loader 30 is itself suspended from a crane or other lifting mechanism (not shown) to move the mats 11 from one location to another. Typically the entire assembly from the base of the loader 30 to the top of the frame 12 has an in-use height of approximately 3 metres and lateral dimensions of 3 metres x 3.5 metres.

In more detail, referring to figures 2a, 2b, the loader 30 comprises two tubes 31, 32 which act as a support for the load-bearing strops 33 on which the mats rest. The tubes 31, 32 have a circular cross-section, of radius approximately 100 millimetres and length 5.5 metres.

The tubes 31, 32 are arranged generally parallel to each other and joined, in the disclosed embodiment by a plurality of strops 33 extending from one tube to the other at right-angles to the tubes 31, 32. It should be recognised that other configurations of strops 33 can be used such as a crossed or zigzag arrangement. In addition, a central supporting strop (not illustrated) running parallel to the tubes along and adjoined to the centres of the strops 33 can be included.

The strops are formed of a flat webbing material, which can have a protective sleeve arranged thereabout. The webbing material can be formed of, for example, polyester or polypropylene, In order to secure the strops 33 to the tubes 31, 32 shackles 34 are utilised as shown in Figure 3. The shackles 34 are secured to plates 35, welded to the tube 32, by means of bolts 36 passing through a hole 37 in a plate 35. In order to protect the shackles 34 from damage by the mat 11, shroud plates 38, 39 of 200 millimetre width and formed of 6 millimetre thick steel are welded along the length of each of the tubes 31, 32.

Cut-outs 40 are included within the shroud to enable securement of the loader 30 to the spreader frame 12 (see Figure 4). The cut-outs 40 allow a webbing sling 41 to be secured through the eyes 42, about the tube 31, 32 and about a clip 43 attached to the spreader frame 12.

Regarding the spreader frame 12, this comprises a rectangular or square structure, formed of 120 millimetres x 120 millimetres square hollow structure steel beams 51, with walls around 6.3 millimetres in thickness. It will be recognised that the length and wall thickness will be determined by the intended use and should not be taken to be limiting. In order to brace the frame, diagonal cross-pieces 52 made of 50 millimetres x 50 millimetre square hollow structure steel are included.

To facilitate the securing of both the shackles 53 used in supporting the sling 41 and also the anchor shackles 54 used to secure the wire slings 55 to the lifting means, cheek plates 56 are included at the intersection of the beams 51. The cheek plates 56 are shown in more detail in Figure 5. The cheek plates 56 also increase the strength of the joint between adjacent beams 51 by providing an anchor point.

In addition to the above, the frame 12 includes legs 57. The legs 57 act to support the frame 12 during storage and prevent the shackles, particularly the shackles 53 from lying on the ground and being distorted by the weight of the frame 12. Additionally for storage, all webbing strops (main and transverse) can be easily removed to be folded up and dry stored for future use.

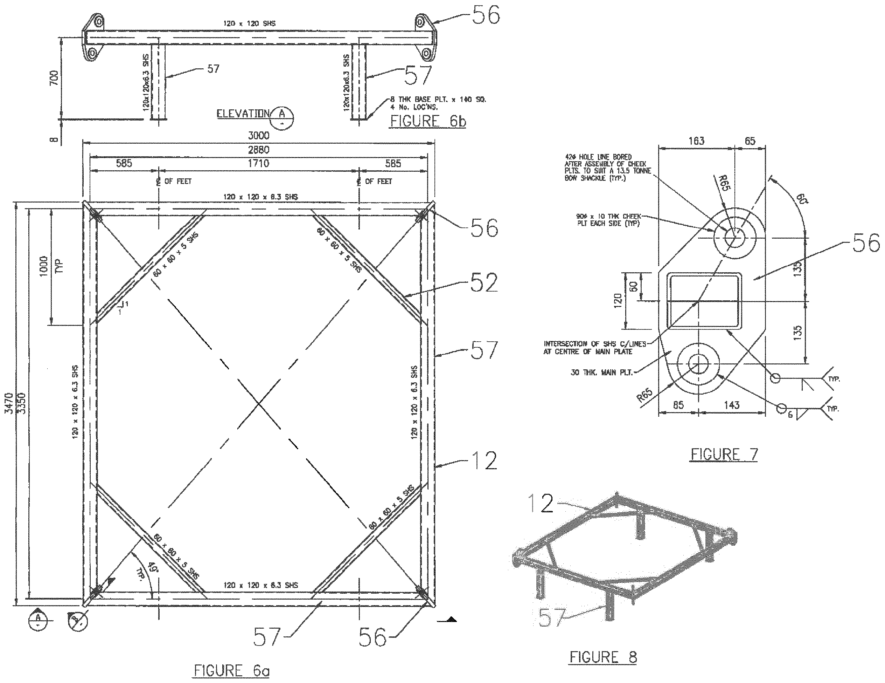

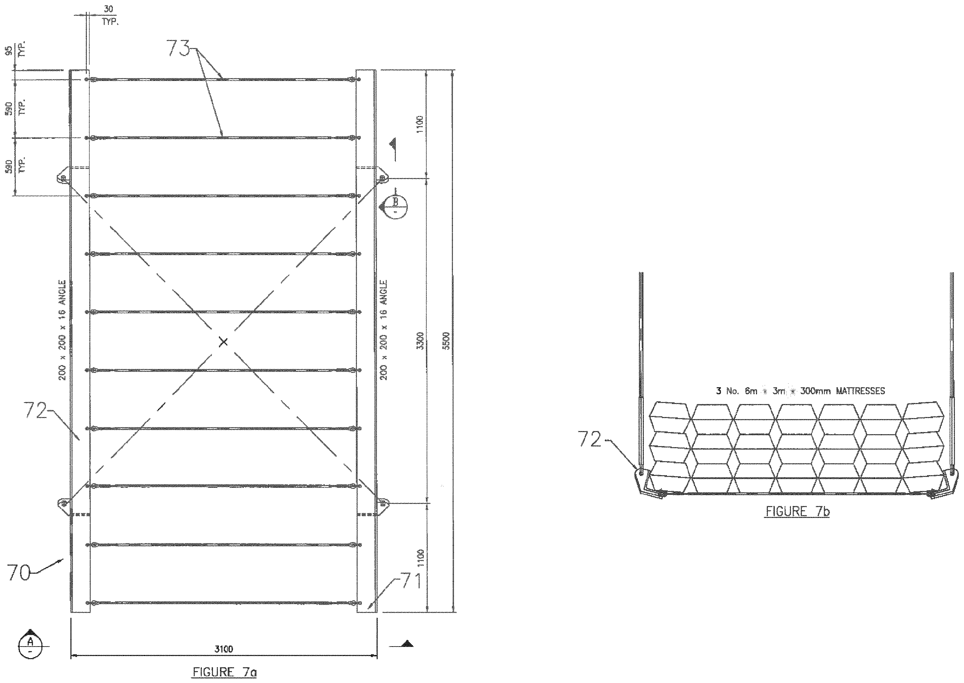

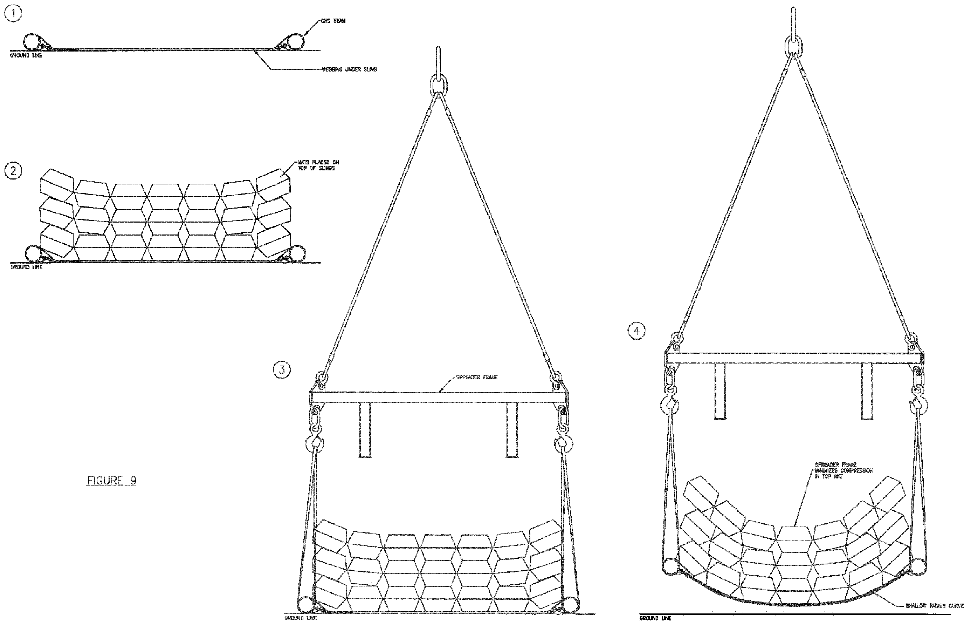

Referring to Figures 7a, 7b these illustrate a second embodiment of a loader 70 in which plastic sheathed support cables 73 are supported on elongate supports 71, 72 of right-angle cross-section. It will be recognised that the strops 33 of the first embodiment can be used in place of support cables 73.

In use therefore and referring to Figure 8, this illustrates diagrammatically, the method by which mats 11 are lifted using the lifting assembly 10.

Initially, the loader 30 is detached from the spreader frame 12 and laid spread out on level ground ((1) of Figure 8). Mats are then stacked onto the strops 33 ((2) of Figure 8). The spreader frame 12 is brought into position by conventional lifting means. The lifting means, as shown in the figures is attached to an intermediate link 58 through which wire slings 59 pass. The wire slings 59 also pass through the shackles 54 as shown in Figures 1a, 1b.

Once the spreader frame 12 is in position over the mats 11, the webbing sling 41 is secured through the eyes 42 and the clip 43 ((3) of Figure 8). The spreader frame 12, together with the attached load can then be lifted and moved to the required location ((4) of Figure 8). Because the two tubes 31, 32 attach to opposite edges of the spreader frame 12, the strops 33, and hence the mats 11 are not forced into as high a radius of curvature as with conventional lifting means. The damage to the mats 11 is therefore lessened. Moreover, the strops 33 are quite broad and hence the mass of the mats 11 is spread over a wider extent, resulting in less damage to the mats 11. Furthermore, the curvature of the tubes 31, 32 incurs also less damage to the mats 11 than conventional lifting means.

## Claims

1. A loader for moving a mattress between locations, the loader (30) comprising two elongate members of tubular construction (31,32), wherein said elongate members (31,32) are arranged parallel to each other and linked together by a plurality of flexible strops (33), **characterised in that** the strops are formed of a webbing material.

2. A loader according to Claim 1, wherein the webbing material is formed from a plastics material such as a polyester or a polypropylene.

3. A loader according to any preceding claim, wherein the strops are formed and stitched to provide eye loops.

4. A loader according to any preceding claim, wherein a strop can be increased or decreased in length to accommodate different sizes of mattresses.

5. A loader according to any preceding claim, wherein one or more further strops are joined across two or more strops to increase the load-bearing capacity.

6. A loader according to any preceding claim, wherein a strop includes wear sleeves to minimize abrasion damage.

7. A loader according to any preceding claim, wherein the tubing is of circular cross-section.

8. A loader according to Claims 1 - 7, wherein an elongate member has a right-angle cross-section.

9. A lifting assembly comprising a loader in accordance with Claims 1 -8, and further including a frame to support the loader during operation,
the frame having, depending from each of two opposed edges, a connection means to receive and retain a sling, the sling coupling the frame to the elongate member of the loader.

10. A lifting assembly according to Claim 9, wherein the frame includes a plurality of legs to support the frame when not in use.

11. A method of moving a plurality of mattresses from one location to another, the method comprising the steps of laying down a loader as defined above in claims 1 - 8 on a flat surface such as the ground;
placing one or more mattresses on the flexible strops of the loader in a stacked configuration,
positioning a frame of a lifting assembly as described and defined above in claim 9, above the
mattresses and the loader;
fixing, by means of webbing strops, the elongate members of the loader to the coupling means of the frame.

## Patentansprüche

1. Eine Ladevorrichtung zum Bewegen einer Matratze zwischen Orten, wobei die Ladevorrichtung (30) zwei längliche Elemente mit rohrförmigem Aufbau (31, 32) umfaßt,
wobei die längliche Elemente (31, 32) parallel zueinander angeordnet und durch eine Vielzahl von flexiblen Schlingen (33) miteinander verbunden sind, **dadurch gekennzeichnet, dass** die Schlingen aus einem Gurtband gebildet sind.

2. Ladevorrichtung nach Anspruch 1, wobei das Gurtband aus einem Kunststoffmaterial wie einem Polyester oder einem Polypropylen gebildet ist.

3. Ladevorrichtung nach einem der vorhergehenden Ansprüche, wobei die Schlinge geformt sind und genäht, um Ösenschlaufen zu erhalten.

4. Ladevorrichtung nach einem der vorhergehenden Ansprüche, wobei eine Schlinge in der Länge vergrößert oder verkleinert werden kann, um verschiedene Größen von Matratzen aufzunehmen.

5. Ladevorrichtung nach einem der vorhergehenden Ansprüche, wobei eine oder mehrere weitere Schlinge über zwei oder mehrere Schlinge hinweg verbunden sind, um die Tragfähigkeit zu erhöhen.

6. Ladevorrichtung nach einem der vorhergehenden Ansprüche, wobei die Schlinge Verschleißhülsen zur Minimierung von Abriebschäden enthält.

7. Ladevorrichtung nach einem der vorhergehenden Ansprüche, wobei das Rohr einen kreisförmigen Querschnitt aufweist.

8. Ladevorrichtung nach einem der Ansprüche 1 bis 7, wobei ein längliches Element einen rechtwinkligen Querschnitt aufweist.

9. Hebeeinrichtung mit einer Ladevorrichtung nach Anspruch 1 bis 8 und ferner mit einem Rahmen zum Abstützen der Ladevorrichtung während des Betriebs, wobei der Rahmen von jeder der beiden gegenüberliegenden Kanten herabhängend eine Verbindungseinrichtung zum Aufnehmen und Halten einer Schlinge aufweist, wobei die Schlinge den Rahmen mit dem länglichen Element der Ladevorrichtung verbindet.

10. Hebeeinrichtung nach Anspruch 9, wobei der Rahmen eine Vielzahl von Beinen umfasst, um den Rahmen zu stützen, wenn er nicht in Gebrauch ist.

11. Verfahren zum Bewegen einer Vielzahl von Matratzen von einem Ort zu einem anderen, wobei das Verfahren die folgenden Schritte umfaßt: Ablegen einer Ladevorrichtung, wie oben in den Ansprüchen definiert, auf einer ebenen Fläche, wie dem Boden; Anordnen einer oder mehrerer Matratzen auf die flexiblen Schlingen der Ladevorrichtung in einer gestapelten Konfiguration, Positionieren eines Rahmens einer Hebeeinrichtung, wie oben in Anspruch 9 beschrieben und definiert, über den Matratzen und der Ladevorrichtung, wobei die länglichen Elemente der Ladevorrichtung mit Hilfe von Gurtbandschlingen an den Kopplungsmitteln des Rahmens befestigt werden.

## Revendications

1. Un chargeur pour déplacer un matelas entre différents endroits, le chargeur (30) comprenant deux éléments allongés de construction tubulaire (31, 32),
Dans lequel lesdits éléments allongés (31, 32) sont disposés parallèlement les uns aux autres et reliés entre eux par une pluralité de bandes flexibles (33), **caractérisée en ce que** les bandes sont formées d'un matériau en forme de sangle.

2. Chargeur selon la revendication 1, dans lequel le matériau de sangle est formé d'une matière plastique telle qu'un polyester ou un polypropylène.

3. Chargeur selon l'une quelconque des revendications précédentes, dans lequel les bandes sont formées et cousues pour fournir des boucles-oeil.

4. Chargeur selon l'une quelconque des revendications précédentes, dans lequel une bande peut être augmentée ou diminuée en longueur pour s'adapter à différentes tailles de matelas.

5. Chargeur selon l'une quelconque des revendications précédentes, dans lequel une ou plusieurs autres bandes sont jointes à travers deux ou plusieurs bandes pour augmenter la capacité de charge.

6. Chargeur selon l'une quelconque des revendications précédentes, dans lequel une bande comprend des manchons d'usure pour minimiser les dommages causés par l'abrasion.

7. Chargeur selon l'une quelconque des revendications précédentes, dans lequel la tuyauterie est de section circulaire.

8. Chargeur selon les revendications 1 à 7, dans lequel un élément allongé a une section transversale à angle droit.

9. Ensemble de levage comprenant un chargeur selon les revendications 1-8, et comprenant en outre un cadre pour soutenir le chargeur pendant le fonctionnement, le cadre ayant, dépendant de chacun des deux bords opposés, un moyen de connexion pour recevoir et retenir une élingue, l'élingue couplant le cadre à l'élément allongé du chargeur.

10. Ensemble de levage selon la revendication 9, dans lequel le cadre comprend une pluralité de pieds pour soutenir le cadre lorsqu'il n'est pas utilisé.

11. Procédé pour déplacer une pluralité de matelas d'un endroit à un autre, le procédé comprenant les étapes consistant à déposer un chargeur tel que défini ci-dessus dans les revendications sur une surface plane telle que le sol ; à placer un ou plusieurs matelas sur les bandes flexibles du chargeur dans une configuration empilée, à positionner un cadre d'un ensemble de levage tel que décrit et défini ci-dessus dans la revendication 9, au-dessus des matelas et le chargeur, en fixant, au moyen de bandes de sangle, les éléments allongés du chargeur aux moyens d'accouplement du cadre.
